# EUROPEAN PATENT SPECIFICATION

(11) **EP 4 502 775 B1**
(45) Date of publication and mention of the grant of the patent: **26.08.2026**
(21) Application number: 23788697.3
(22) Date of filing: 02.03.2023
(51) Int. Cl.: G06F 3/04817, G06F 3/04883, G06F 3/04886, G06F 3/0481, G06F 3/0482, G06F 3/0487, H04L 51/046, H04M 1/72436, H04M 1/72469

(54) **MESSAGE PROCESSING METHOD AND APPARATUS, ELECTRONIC DEVICE, AND STORAGE MEDIUM**
NACHRICHTENVERARBEITUNGSVERFAHREN UND -VORRICHTUNG, ELEKTRONISCHE VORRICHTUNG UND SPEICHERMEDIUM
PROCÉDÉ ET APPAREIL DE TRAITEMENT DE MESSAGE, DISPOSITIF ÉLECTRONIQUE ET SUPPORT DE STOCKAGE

(30) Priority: 13.04.2022 CN 202210388818
(43) Date of publication of application: 05.02.2025
(73) Proprietor: Lemon Inc., Grand Cayman, KY1-1205 (KY)
(72) Inventor: LIN, Ye, Beijing 100086 (CN); GUO, Peijun, Beijing 100086 (CN); GUO, Dongni, Singapore 018960 (SG)
(74) Representative: Marks & Clerk LLP
(86) International application number: PCT/SG2023/050124
(87) International publication number: WO 2023/200397

(56) References cited:
- CN-A- 112 883 181
- CN-A- 114 003 326
- CN-A- 114 003 326
- US-A1- 2017 336 958
- US-A1- 2019 073 801
- US-A1- 2024 320 014
- US-B1- 11 079 907
- CONSTINE JOSH: "Facebook Messenger rolls out mention alerts and message Reaction emoji | TechCrunch", 23 March 2017 (2017-03-23), XP093279272, Retrieved from the Internet <URL:https://techcrunch.com/2017/03/23/facebook-messenger-reactions/> [retrieved on 20250520]
- PORTER JON: "WhatsApp starts rolling out emoji reactions in Android beta", 22 March 2022 (2022-03-22), XP093279279, Retrieved from the Internet <URL:https://www.theverge.com/2022/3/22/22990675/whatsapp-beta-reactions-android-emoji> [retrieved on 20200520]
- ZIBREG CHRISTIAN: "Here's how to use Telegram emoji reactions", 31 December 2021 (2021-12-31), XP093279394, Retrieved from the Internet <URL:https://web.archive.org/web/20220125130113/https://www.idownloadblog.com/2021/12/31/telegram-emoji-reactions-update/> [retrieved on 20200520]
- MAC2DROID: "How To Change Instagram DM Message Reaction; Instagram Double Tap Reaction Change: MAC2DROID", 12 January 2021 (2021-01-12), XP093279396, Retrieved from the Internet <URL:https://www.youtube.com/watch?v=rlkuPxWhHf8> [retrieved on 20200520]

## Description

### TECHNICAL FIELD

Embodiments of the present disclosure relate to the technical field of message processing, and in particular to a message processing method, device, electronic device and storage medium.

### BACKGROUND

At present, many applications provide users with the instant message function. Based on the instant message technology, it not only realizes communication between users, but also enables users to further process messages according to their own wishes. Constine Josh: "Facebook Messenger rolls out mention alerts and message Reaction emoji TechCrunch", 23 March 2017 discloses a technical solution of replying a message by attaching a love, smile, wow, sad, angry, thumbs-up or thumbs-down emoji to a specific message. Porter Jon: "WhatsApp starts rolling out emoji reactions in Android beta", 22 March 2022 https://www.theverge.com/2022/3/22/22990675/whatsapp-beta-reactions-android-emoji discloses a technical solution of, with a long-press of a received message, users reacting with one of six emoji: thumbs up, heart, crying, laugher, shocked face, or folded hands. Zibreg Christian: "Here's how to use Telegram emoji reactions", 31 December 2021, https://www.idownloadblog.com/2021/12/31/telegram-emoji-reactions-update/) discloses a technical solution on how to use emoji reactions on telegram. Mac2droid: "How To Change Instagram DM Message Reaction; Instagram Double Tap Reaction Change: MAC2DROID", 12 January 2021, URL:https://www.youtube.com/watch?v=rlkuPxWhHf8) discloses a technical solution on how to change Instagram DM message reaction. US20170336958A1 discloses an electronic device displaying a messaging user interface on the display, the messaging user interface including a conversation transcript of a messaging session between a user of the electronic device and at least one other user. The device receives a first message within the messaging session from an electronic device that corresponds to another user included in the messaging session; in response to receiving the first message, the device displays the first message in a first message region in the conversation transcript on the display. The device detects a first input by a first contact at a location on the touch-sensitive surface that corresponds to a location of the first message region in the conversation transcript; in response to detecting the first input, the device displays an acknowledgement selection affordance at a location in the messaging interface that corresponds to the first message region. The acknowledgement selection affordance displays a plurality of acknowledgement options. The device detects a second input by a second contact at a location on the touch-sensitive surface that corresponds to a location of a first acknowledgement option in the acknowledgement selection affordance; and, in response to detecting the second input, the device applies the first acknowledgement option to the first message region

### SUMMARY

The invention is defined in the appended independent claims. Preferred embodiments are defined in the dependent claims.

### BRIEF DESCRIPTION OF THE DRAWINGS

The above and other features, advantages, and aspects of the embodiments of the present disclosure will become more apparent from the following embodiments with reference to the drawings. Throughout the drawings, the same or similar reference signs indicate the same or similar elements. It should be understood that the drawings are schematic and the components and elements are not necessarily drawn to scale.
FIG. 1 is a schematic flowchart of a message processing method provided by an embodiment of the present disclosure;
FIG. 2 is a schematic diagram of displaying trigger prompt information at a position associated with a conversation message provided by an embodiment of the present disclosure;
FIG. 3 is a schematic diagram of displaying a emoticon area and a message processing area provided by an embodiment of the present disclosure;
FIG. 4 is a schematic diagram of displaying a mask layer provided by an embodiment of the present disclosure;
FIG. 5 is a schematic diagram of displaying a conversation message on a pop-up page provided by an embodiment of the present disclosure;
FIG. 6 is a schematic diagram of displaying a report control in a message processing area provided by an embodiment of the present disclosure;
FIG. 7 is a schematic diagram of displaying an emoticon feedback area provided by an embodiment of the present disclosure;
FIG. 8 is a schematic diagram of displaying a plurality of emoticons in a tiled manner provided by an embodiment of the present disclosure;
FIG. 9 is a schematic diagram of displaying the total number of presented emoticons provided by an embodiment of the present disclosure;
FIG. 10 is a schematic diagram of displaying a list page provided by an embodiment of the present disclosure;
FIG. 11 is a schematic structural diagram of a message processing device provided by an embodiment of the present disclosure;
FIG. 12 is a schematic structural diagram of an electronic device provided by an embodiment of the present disclosure.

### DETAILED DESCRIPTION

Exemplary embodiments of the present disclosure will now be described in detail with reference to the accompanying drawings. Although some embodiments of the present disclosure are shown, it should be understood that the present disclosure can be implemented in various forms, and should not be construed as being limited to the embodiments set forth herein. On the contrary, these embodiments are provided for a more thorough and complete understanding of the present disclosure. It should be understood that the drawings and embodiments of the present disclosure are only used for exemplary purposes, and are not used to limit the scope of protection of the present disclosure.

It should be understood that the various steps described in the methods of the embodiments of the present disclosure may be executed in a different order, and/or executed in parallel. In addition, the methods may comprise additional steps and/or some of the illustrated steps may be omitted. The scope of the disclosure is not limited in this regard.

The term "comprising" and its variants as used herein is an open-ended mode expression, that is, "comprising but not limited to". The term "based on" means "based at least in part on". The term "one embodiment" means "at least one embodiment"; the term "another embodiment" means "at least one additional embodiment"; and the term "some embodiments" means "at least some embodiments". Related definitions of other terms will be given in the following description.

It should be noted that the concepts of "first" and "second" mentioned in the present disclosure are only used to distinguish different devices, modules or units, and are not used to limit the order of functions performed by these devices, modules or units, or interdependence therebetween. It should be noted that the modifications of "a" and "a plurality of" mentioned in the present disclosure are illustrative and not restrictive, and those skilled in the art should understand that unless clearly indicated in the context, they should be understood as "one or more".

The names of messages or information exchanged between multiple devices in the embodiments of the present disclosure are only used for illustrative purposes, and are not used to limit the scope of these messages or information.

The inventors of the present disclosure found that, in the solution provided by the related art, when a user processes a message, related emoticons or controls are usually stacked or concentrated in a menu bar or a small area. Based on this, the user needs to perform multiple operations to process the message. Therefore, the operation logic is not simple enough. In addition, when the identification information associated with each message processing control is long, the display method in the related art cannot clearly display the information to users, resulting in poor user experience accordingly.

In view of this, an embodiment of the present disclosure provides a message processing method, which can not only clearly show various emoticons and controls related to message processing to users, but also reduce the problem of stacking or concentrating multiple emoticons or controls in one control area or small area, thereby simplifying the operation logic and improving the user experience.

Before introducing the technical solution, an exemplary description of its application scenario will be given. The technical solution can be applied in a scenario where a user feeds back and processes a message in the chat interface, and can also be applied in a scenario where a conversation interface is applied in a multi-person video process. For example, when a user uses related application software to chat with another user, or chat with multiple users in a group, the user may want to provide feedback on a message or process a message in the chat interface in a simple way. For example, when a user wants to provide an emoticon as feedback on a certain message, that is, express his approval of the content of the message by means of an emoticon, based on the solution of the embodiment of the present disclosure, an emoticon area can be displayed in the display interface by a trigger operation, and then a corresponding emoticon can be selected therefrom to give feedback on the message; or, when a user wants to forward a certain message in the chat frame to other users or other groups, based on the solution of the embodiment of the present disclosure, a message processing area that is different from the emoticon area can be displayed in the display interface by a trigger operation, and then a corresponding control can be selected from the message processing area to forward the message.

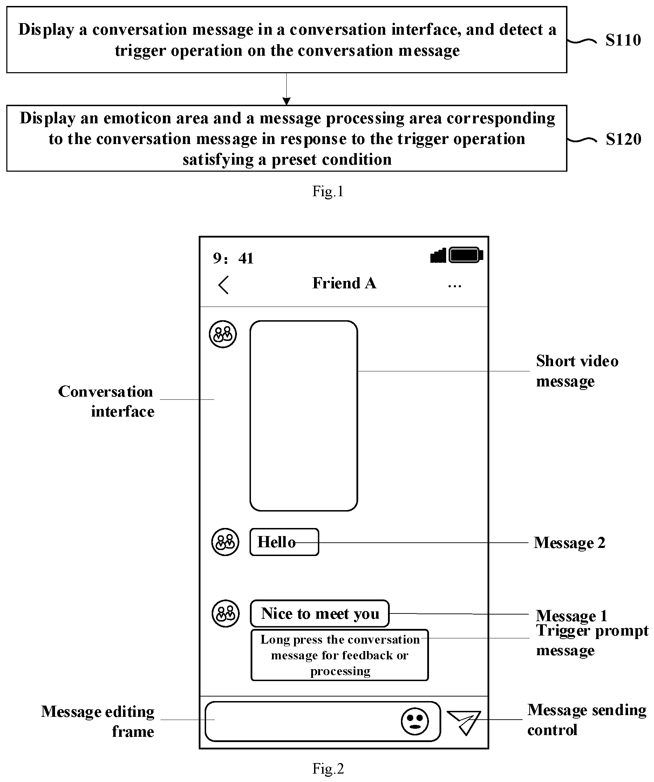

FIG. 1 is a schematic flowchart of a message processing method provided by an embodiment of the present disclosure. The embodiment of the present disclosure is applicable to a situation where a user gives feedback on a message or processes the messages in a chat interface. The method is executed by a message processing device, which may be implemented in the form of software and/or hardware. In some embodiments, for example, the message processing device may be implemented in the form of an electronic device. For example, the electronic device is a mobile terminal, a PC (Personal Computer) terminal, a server, or the like.

As shown in FIG. 1, the method comprises step S110 to S120.

At step S110, a conversation message is displayed in a conversation interface, and a trigger operation on the conversation message is detected.

The conversation message is a message sent by a user. It can be understood that for a client, the conversation message comprises not only a message sent by a user corresponding to the client, but also a received message sent by another user. It should be noted that, in the embodiment, the conversation message can be either a text message, or a voice message or a video message, and each conversation message is associated with a user identification, so as to facilitate the recognition of the source of the message.

Correspondingly, the conversation interface may be an interface pre-built in the application software provided with a chatting communication function or information sharing function. Through the conversation interface, multiple conversation messages can be displayed one by one according to their sending time. Those skilled in the art should understand that a plurality of conversation messages are usually arranged vertically in the conversation interface, with received messages and user identifications associated with the messages displayed on the left side of the conversation interface, and the message sent by the user corresponding to the client and a user identification associated with the message displayed on the right side of the conversation interface, wherein the latest conversation message is usually displayed at a bottom of the conversation interface, which will not be repeated in the embodiments of the present disclosure.

In the embodiment, since the user has the demand for feedback or processing of a conversation message in the conversation interface, in order to facilitate the user to perform related operations, it is first necessary to display some trigger prompt information near the conversation message. It can be understood that the displayed trigger prompt information is at least used to guide the user's message feeding back operation, or guide the user's message processing operation.

In some embodiments, the trigger prompt information is displayed at a position associated with the conversation message to prompt the trigger operation and/or the preset condition of the conversation message. Referring to FIG. 2, when the user communicates with friend A through the application software, three messages (i.e., a short video message, message 1, and message 2) continuously sent by friend A are displayed together with an avatar of friend A on the left side of the conversation interface. Further, in order to guide the user to feed back or process a message of friend A, the client can display a trigger prompt message "Long press the conversation message for feedback or processing" at a position associated with message 1 (that is, below a display frame corresponding to message 1 shown in FIG. 2). Therefore, it can be understood that when the user sees the trigger prompt information, the user can understand that message 1 can be fed back or processed by long-pressing on the display frame corresponding to message 1. Of course, in an actual application, the associated position also comprises an end position of the display frame to which the conversation message belongs, or a position at a bottom of the display frame. Therefore, the actual display position of the trigger prompt information can be adjusted according to actual needs. In addition, after receiving messages from other users, the application can only display trigger prompt information at an associated position of the display frame of the latest conversation message, or display, trigger prompt information at an associated position of the display frame of each conversation message, which is not specifically limited in the embodiment of the present disclosure.

In some embodiments, in an actual application, in order to enable the user to clearly distinguish the conversation message and the trigger prompt information in the limited-sized conversation interface, the application may also display the trigger prompt information and the corresponding conversation message in a differentiated manner; wherein the differentiated displaying comprises displaying the conversation message and the trigger prompt information in different fonts, colors and/or font sizes, or displaying a sub-display frame to which the trigger prompt information belongs and the display frame with different fill colors.

Referring to FIG. 2, it can be seen that the text messages sent by friend A (that is, the message 1 and the message 2) are both displayed with one font type and are displayed in bold. When the application displays the trigger prompt information for the display frame corresponding to message 1, the trigger prompt information "Long press the conversation message for feedback or processing" will be displayed in another font type. In addition, the font size of the trigger prompt message is slightly smaller than the font size of message 1, and the color of the text of the trigger prompt message is also different from the color of the text of the conversation message. Further, the application can also fill the display frame corresponding to the conversation message with white, and fill the sub-display frame corresponding to the trigger prompt message with gray, so as to emphasize the difference therebetween. Of course, in an actual application, the conversation message may be distinguished from the trigger prompt information in one way described above, or in several ways, which is not specifically limited in the embodiment of the present disclosure.

Through distinguishing the display of the text of message 1 and the display of the text of the trigger prompt information, it is convenient for the user to accurately distinguish whether the text displayed in the conversation interface is the conversation message or the trigger prompt information.

In some embodiments of the present disclosure, when at least one conversation message is displayed in the conversation interface, the application can detect a trigger operation for the at least one conversation message in real time. Specifically, the trigger operation comprises: a long-press operation on the conversation message, and correspondingly the preset condition comprises: a duration of the long-press operation on the conversation message reaching a preset duration threshold.

Taking FIG. 2 as an example again, when the application displays trigger prompt message "Long press the conversation message for feedback or processing" below the display frame of message 1, the user can understand how to provide feedback or process the message, and then perform a long-press operation on the display frame of one of the messages sent by friend A according to the user's own wishes (for example, perform a long-press operation on the display frame of message 1). After detecting the user's touch on the display frame, the application can accumulate the duration of the user's touch to obtain a duration of the long-press operation of the user. Further, when it is detected that the duration of the long-press operation reaches a preset duration threshold (2s), the application can determine that the user's trigger operation has met the preset condition. In an actual application, the trigger operation can also comprise various types of operation. For example, multiple consecutive click operations on the display frame of the conversation message can be used as the trigger operation. Correspondingly, the preset condition can also be adaptively changed according to different trigger operations.

At step S120, an emoticon area and a message processing area corresponding to the conversation message are displayed in response to the trigger operation satisfying a preset condition.

The emoticon area comprises at least one selectable emoticon, and the message processing area comprises at least one function control. It can be understood that under the premise of not affecting the user's browsing of the corresponding conversation messages, the emoticon area and the message processing area can be in various shapes. The selectable emoticons are used to reflect the user's various emotions. For example, the heart emoticon indicates that the user likes the content of the message, the smiling emoticon means that the user is very happy after viewing the content of the message, the crying emoticon means that the user is uncomfortable after viewing the content of the message, etc.. The function controls are the controls pre-developed by the staff and integrated into the application, each function control being associated with a subprogram having a certain function. For example, the message processing area comprises a reply control for replying to a certain message, a forward control for the user to forward a certain message, and a delete control for deleting a certain message.

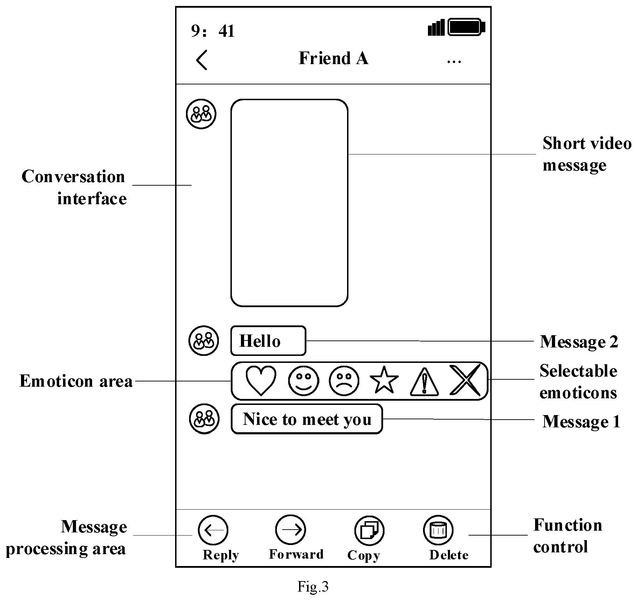

In the embodiment, the emoticon area and the message processing area are independent of each other, and have different display positions in the conversation interface. In some embodiments, the emoticon area is displayed at an edge of a display frame to which the conversation message belongs, and the message processing area is displayed at a bottom of the conversation interface. The display of the emoticon area and the message processing area will be described below with reference to FIG. 3.

Referring to FIG. 3, when it is detected that the duration of the long-press operation of the user on the display frame of message 1 reaches the preset duration threshold (2s), an emoticon area can be displayed at an upper edge of the display frame of the message, the emoticon area comprising a plurality of emoticons that can reflect the user's emotions, such as heart, smiley face, crying face, star, attention, error and the like. Also, a message processing area is displayed at the bottom of the conversation interface, that is, where a message editing frame is originally displayed, the message processing area comprising a reply control for replying to the message 1, a forward control for forwarding message 1, a copy control for copying the content of message 1, and a delete control for deleting the content of message 1. Of course, in an actual application, the emoticon area can not only be displayed at the upper edge of the display frame of the message, but also can be displayed on the left, right or lower edge of the display frame of the message according to actual needs. Moreover, the expressions comprised in the emoticon area the controls integrated in the message processing area can be set according to actual needs, which are not specifically limited in the embodiment of the present disclosure.

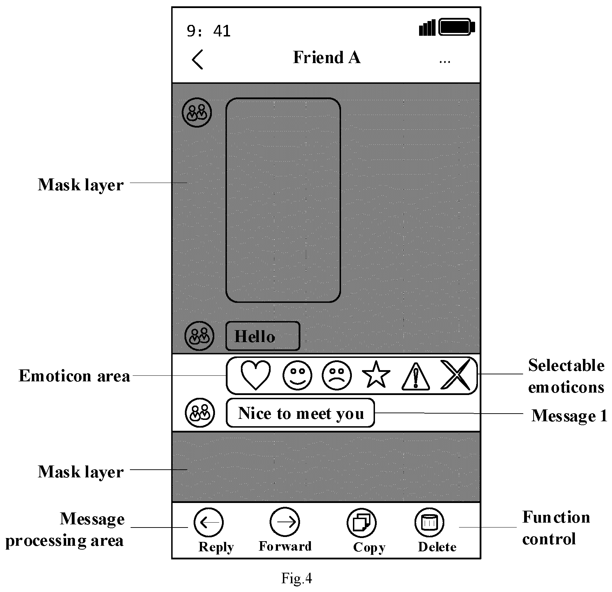

In some embodiments of the present disclosure, after the application displays the emoticon area and the message processing area at different positions in the conversation interface, in order to highlight the message currently being fed back or being processed, the application can also mask display of another conversation message in the conversation interface to which the conversation message belongs. In some embodiments, the masking display comprises: drawing a mask layer corresponding to the other conversation message to mask display of the other conversation message based on the mask layer. A transparency of the mask layer is within a preset transparency range. The case of masking display of another conversation message will be described below with reference to FIG. 4.

For example, in response to the application displaying the emoticon area and the message processing area corresponding to message 1 in the conversation interface, one or more mask layers are also generated according to a preset transparency, so as to mask other conversation messages or those areas not related to message 1. As shown in FIG. 4, mask layers in appropriate sizes and with a transparency of 60% are displayed over the areas on the top and bottom of the display frame of message 1, respectively. Moreover, the user can set the preset transparency range corresponding to the mask layer in advance through the application. For example, when the transparency range is 20%-80%, the application can select a value within the transparency range as the transparency of the actual rendered mask layer according to actual situations. It can be understood that, through providing a way for users to adjust the transparency of the mask layer, it is convenient for users to flexibly change the final style of the display interface, so as to avoid the rendered mask layer from affecting their viewing experience.

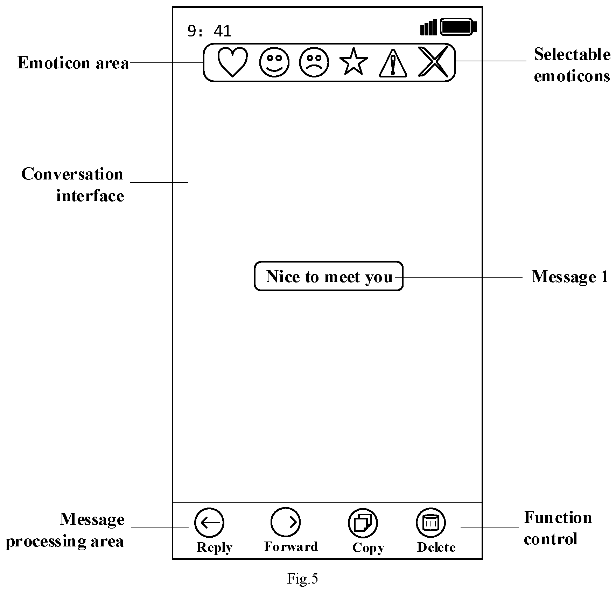

In some embodiments of the present disclosure, in addition to the ways described above, the emoticon area and the message processing area can also be displayed in other ways. In some embodiments, the conversation message is displayed on a pop-up page; and the emoticon area is displayed at an edge of a display frame to which the conversation message belongs, and the message processing area is displayed at a bottom of the pop-up page. In an actual application, a page size of the pop-up page can be consistent with a interface size of the conversation interface. The way of displaying described above will be described below with reference to FIG. 5.

Referring to FIG. 5, when it is detected that the user's trigger operation satisfies the preset condition, the application can construct a pop-up page with the same size and position as the conversation interface, and render the page to the display interface for display. As can be seen from FIG. 5, the content "Nice to meet you" of message 1 fed back or processed by the user can be displayed in the center of the pop-up page. Of course, in an actual application, the content of the message can also be displayed in an upper part area or a lower part area of the pop-up page as needed, which is not specifically limited in the embodiment of the present disclosure.

Referring to FIG. 5, in response to the content of message 1 being displayed in the pop-up page, an emoticon area can also be displayed at the top of the pop-up page. For example, an emoticon area containing six selectable emoticons is displayed at the top of the page. A message processing area may be displayed at the bottom of the pop-up page. For example, a message processing area comprising a reply control, a forward control, a copy control and a delete control is displayed at the bottom of the page.

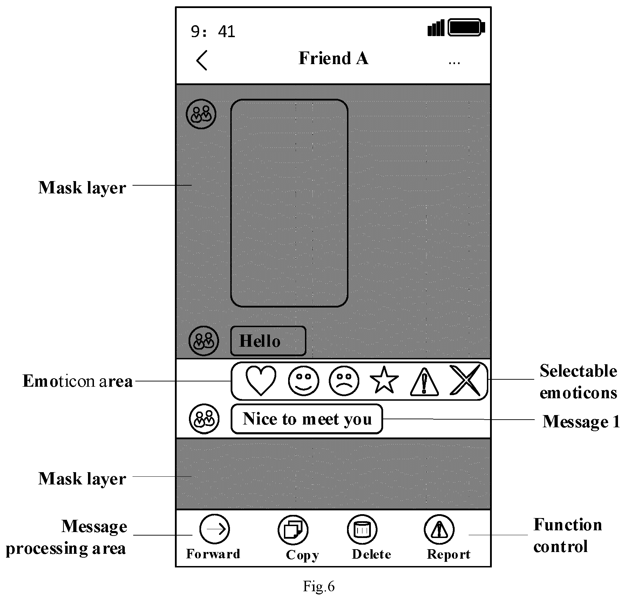

In some embodiments of the present disclosure, at least one function control in the message processing area is displayed laterally, and the message processing area is configured to be slid laterally to display more function controls. The manner of displaying function controls through a lateral-slide operation will be described below with reference to FIG. 4 and FIG. 6.

Referring to FIG. 4, the message processing area comprises 5 sliding windows, each sliding window being used to display a function control, such as a reply control, a forward control, a copy control, a delete control, or a report control. Due to a limited display area of the message processing area, the application can only display the sliding windows corresponding to the first four controls described above. In this case, if the user wants to report message 1, that is, when the user wants to click on the report control on the far right side of the message processing area, the user can perform a leftward slide operation on the message processing area by touch, so that the message processing area displays a forward control, a copy control, a delete control, and a report control as shown in FIG. 6. Therefore, the sliding windows displayed in the message processing area and the controls associated with the sliding windows can be updated.

In some embodiments of the present disclosure, when the message processing area is displayed at the bottom of the conversation interface, the application can also determine an object type of an object to which the conversation message belongs, and determine at least one function control in the message processing area according to the object type.

In some embodiments, in response to the object type being a first object type, the at least one function control does not comprise a report control; and in response to the object type being a second object type, the at least one function control does not comprise a recall control. In response to the object type of the object to which the message belongs being the first object type, it indicates that the message is a message sent by a user corresponding to the current client; and in response to the object type of the object to which the message belongs being the second object type, it indicates that the message is a message sent by another user received by the current client. The report control is used to implement the function of reporting the message to a server, so that the message can be reviewed by the staff operating the server, and the recall control is used to implement the function of recalling the message.

Exemplarily, when a user chats with stranger user B, a message sent by stranger user B may violate relevant regulations of the application. In this case, the user can select the message through a touch operation. When the application detects that the user's touch duration reaches a preset duration threshold, a message processing area corresponding to the message can be displayed. In addition, the application can determine that the object type of the object to which the message belongs is the second object type according to an identifier carried in the message, that is, determine that the message is a message sent by another user to the user corresponding to the client. On this basis, in addition to the above controls such as reply and forward controls, the report control will also be displayed to the user in the message processing area. When it is detected that the user clicks on the report control, the client can report the message to the server in a message or other form, so as to review the message by the relevant staff.

When a user chats with the stranger user B, it may also happen that the user sends a wrong conversation message to the stranger user B, for example, there are many typos in the message. In this case, the user can select the message through a touch operation. When the application detects that the user's touch duration reaches a preset duration threshold, a message processing area corresponding to the message can be displayed. In addition, the application can determine that the object type of the object to which the message belongs is the first object type according to an identifier carried in the message, that is, determine that the message is a message sent by the user corresponding to the client to another user. On this basis, in addition to the above controls such as reply and forward controls, a recall control will also be displayed to the user in the message processing area. When it is detected that the user clicks on the recall control, the client can remove the message, so that it is no longer displayed on the conversation interface between the user and the stranger user B.

According to the invention, displaying of the at least one selectable emoticon in the emoticon area comprises: determining a user identification of a user who performs the trigger operation on the conversation message; and determining at least one selectable emoticon displayed in the emoticon area and a display order of the at least one selectable emoticon according to a language type and/or a region type, and optionally use frequencies of various emoticons, corresponding to the user identification.

The user identification is information that reflects the identities of various users in chats. Through a user identification, the application can determine the language used by the user, the region where the user is currently located, or frequencies that various emoticons are used by the user.

Exemplarily, in the process of displaying at least one selectable emoticon in the emoticon area, if it is determined that the language used by the user is language A according to the user identification of the user to which the message belongs, the application can display multiple selectable emoticons corresponding to a group using language A in the emoticon area. Moreover, these emoticons are displayed in an order that is more in line with the usage habits of the group using language A. For example, if the group prefers the use of the heart and smiley face emoticons during online chats, the above two emoticons will be displayed in the first and second positions respectively in the corresponding emoticon area.

Similarly, if it is determined that the region where the user is currently located is region a according to the user identification of the user to which the message belongs, the application can display multiple selectable emoticons corresponding to a group residing in region a in the emoticon area. Moreover, these emoticons are displayed in an order that is more in line with the usage habits of the group residing in region a. For example, if the group prefers the use of the crying face and sun emoticons during online chats, the above two emoticons will be displayed in the first and second positions respectively in the corresponding emoticon area.

If a mapping table representing the relationship between the frequencies that various emoticons are used by the user and corresponding emoticons is determined in a database associated with the application according to the user identification of the user to which the message belongs, the application can select emoticons with the highest use frequencies for the user, and display these emoticons in the emoticon area sequentially according to their use frequencies. Through the above personalized emoticon display method, the user experience can be further improved.

It should be noted that, in an actual application, the language type, region type and optionally use frequencies of various emoticons can be separately used as the basis for determining the display order of emoticons. For example, a plurality of selectable emoticons can be sorted in the emoticon area only according to the language type; or some of these can be randomly selected and combined as the basis for determining the display order of emoticons. For example, a plurality of selectable emoticons in the emoticon area can be sorted according to a combination of the language type and the region type. Those skilled in the art should understand that the specific combination, and corresponding weights used in the sorting may be set according to actual conditions, which are not specifically limited in the embodiment of the present disclosure.

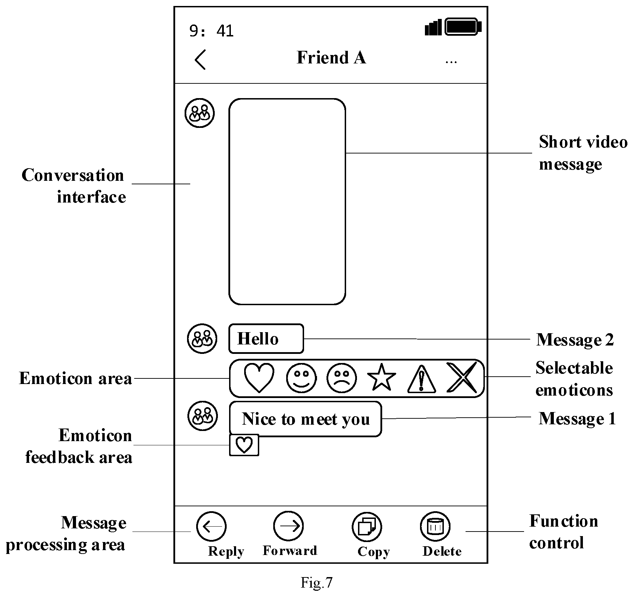

In some embodiments, an emoticon feedback area is created at a bottom of the conversation message or at a bottom of a display frame to which the conversation message belongs and a triggered target emoticon is displayed in the emoticon feedback area when a trigger operation on a selectable emoticon in the emoticon area is detected. The emoticon feedback area will be described below with reference to FIG. 7.

Referring to FIG. 7, when the user selects the heart emoticon from the emoticon area to express his approval and appreciation for message 1 sent by friend A, the application will construct and display a corresponding emoticon feedback area at a bottom of a display frame to which message 1 belongs. Certainly, in an actual application, the emoticon feedback area may also be displayed at the bottom of the conversation message, which is not specifically limited in the embodiment of the present disclosure. After constructing the emoticon feedback area, the application further adds the heart emoticon selected by the user to the emoticon feedback area. It should be noted that the emoticon feedback area constructed by the application is bound to message 1. Therefore, in addition to the user corresponding to the client, friend A can also see in the conversation interface that the user sends a heart emoticon as feedback to the message sent by friend A. In this way, the communication effect between users can be enhanced in a simple and convenient manner.

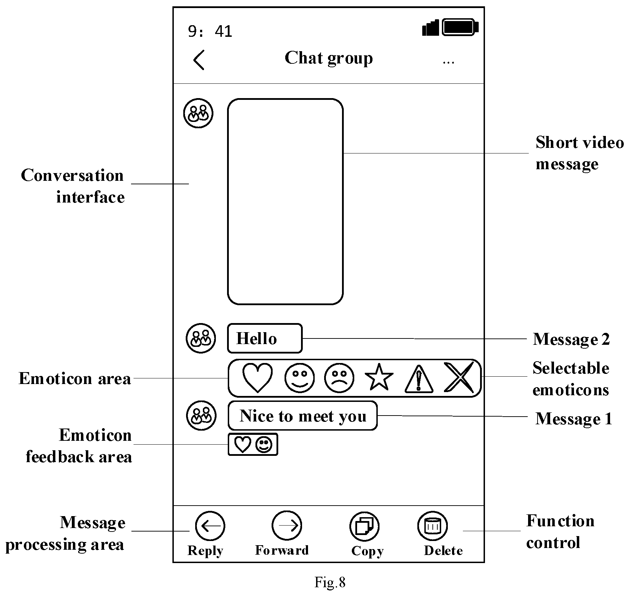

In some embodiments, a plurality of target emoticons corresponding to the conversation message are displayed in a tiled manner in an emoticon feedback area in response to the plurality of target emoticons being received and the plurality of target emoticons being different. The way of displaying multiple emoticons in a tiled manner will be described below with reference to FIG. 8.

Referring to FIG. 8, when multiple users communicate in a chat group, there may also be a situation where multiple users give feedback on message 1 "Nice to meet you" sent by a user, that is, there may be a situation where multiple users long press the display frame corresponding to message 1 respectively and choose emoticons to give feedback to message 1 according to their own wishes. For example, if the user corresponding to the current client sends a heart emoticon for message 1, and another user in the group sends a smiley face emoticon for message 1, the application will also construct and display a corresponding emoticon feedback area at the bottom of the display frame to which the message belongs, in which the heart emoticon selected by the user corresponding to the client and the smiley face emoticon selected by another user are displayed in a tiled manner. Similarly, the emoticon feedback area constructed by the application is bound to message 1. Therefore, any user in the group can see the emoticon feedback area and the two emoticons comprised in the emoticon feedback area.

It should be noted that in response to a plurality of target emoticons corresponding to the conversation message being received, and the plurality of target emoticons comprising same target emoticons, the same target emoticons are treated as a single target emoticon and the single target emoticon and other different target emoticons are displayed in a tiled manner in an emoticon feedback area.

In the above example, referring to FIG. 8, the user corresponding to the current client sends a heart emoticon for the message, and several other users in the group each feed back a smiley face emoticon for the message. In this case, in order to avoid the occupation of multiple repeated emoticons in the emoticon feedback area that has a limited size, the application will only display one smiley face emoticon in the emoticon feedback area, and the heart emoticon fed back by the user corresponding to the current client and the smiley face emoticon are displayed in a tiled manner.

In some embodiments, various target emoticons are displayed in order in the emoticon feedback area according to receiving time of the various target emoticons.

In the above example, referring to FIG. 8, in the process of charting of multiple users in a group, the user corresponding to the current client is the first who responded to message 1 with a heart emoticon. Correspondingly, the application displays a heart emoticon in the constructed emoticon feedback area. Then, when another user in the group responds to message 1 with a smiley face emoticon, the application displays a smiley face emoticon behind the heart emoticon in the emoticon feedback area, so that the effect of displaying the emoticons fed back by multiple users for the message according to the receiving time of the emoticons is achieved.

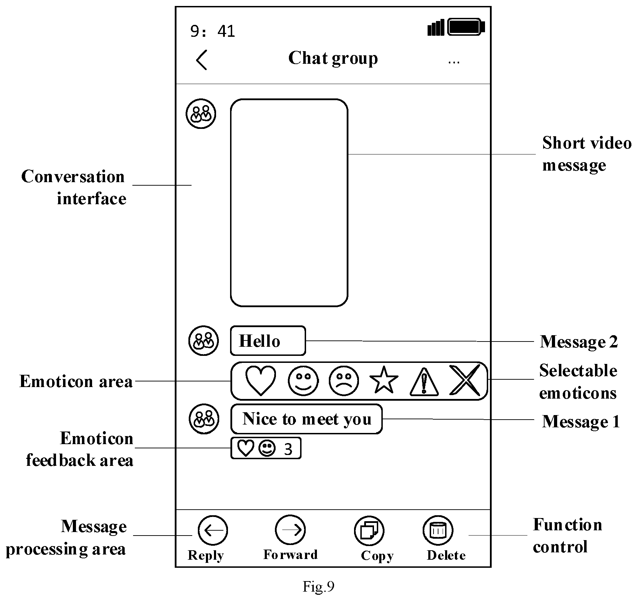

In some embodiments, a total number of all target emoticons presented in the conversation message is displayed at an end of a last target emoticon in the emoticon feedback area. The process of displaying the total number of presented emoticons will be described below with reference to FIG. 9.

Referring to FIG. 9, in the process of chatting of multiple users in a group, the user corresponding to the current client is the first who responded to message 1 with a heart emoticon, and then two other users in the group each respond to message 1 with a smiley face emoticon. In this case, the application will not only display the heart and smiley face emoticons in the emoticon feedback area one by one according to their receiving time in the way described above, but also display the total number 3 of target emoticons at the end of the emoticon feedback area. In this way, users within the group can determine exactly how many users have responded to the message.

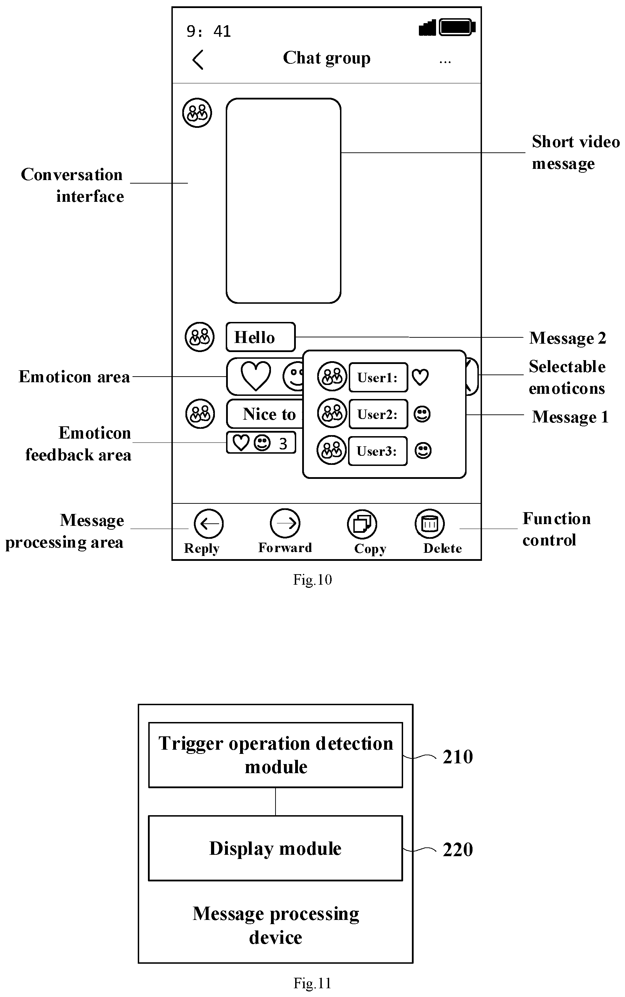

In some embodiments, a list page comprising a plurality of pieces of display data is popped up when it is detected that the emoticon feedback area is triggered; wherein the display data comprises a target emoticon and an user identification corresponding to the target emoticon. The process of displaying a list page will be described below with reference to FIG. 10.

For example, after triggering the target emoticon feedback area, a page can be popped up, which can be used as a list page. The list page can display the emoticons comprised in the emoticon feedback area and their corresponding trigger users. The trigger users can be identified based on their user identifications, for example, the avatars used by the users when registering their accounts.

It should be noted that, if the current user also has corresponding feedback on the conversation message, the emoticon triggered by the user and the user's user identification may be displayed at a first position.

It should be noted that a display size of the list page is smaller than a display size of the conversation interface, and a bottom of the list page horizontally corresponds to a bottom of the conversation interface. For the specific implementation, refer to FIG. 10.

In some embodiments, when a trigger operation on the selectable emoticon in the emoticon area is detected again, a triggered target emoticon is updated to the emoticon feedback area, and a target emoticon corresponding to a previous trigger operation is removed from the emoticon feedback area.

In a practical application, if a user provides emoticon feedback on a message, the feedback can also be changed, that is, for a conversation message, a user can only have one emoticon feedback. If the user modifies the emoticon feedback, the original emoticon feedback can be removed from the emoticon feedback area, and the newly triggered emoticon is displayed in the emoticon feedback area.

In some embodiments, when it is detected that the conversation message is double-clicked, an emoticon feedback area is created at a bottom of the conversation message, and a default emoticon is added to the emoticon feedback area.

In a practical application, in order to improve the convenience of feedback on the conversation message, a feedback emoticon corresponding to a double-click operation can be set, which is then used as the default emoticon. That is, as long as it is detected that a conversation message has been double-clicked and there is no emoticon feedback area, an emoticon feedback area can be created and the default emoticon is displayed in the emoticon feedback area.

In the technical solution of the embodiments of the present disclosure, a conversation message is displayed in a conversation interface, and a trigger operation on the conversation message is detected; and an emoticon area and a message processing area corresponding to the conversation message is displayed in response to the trigger operation satisfying a preset condition; wherein the emoticon area and the message processing area are independent of each other and have different display positions in the conversation interface, the emoticon area comprises at least one selectable emoticon, and the message processing area comprises at least one function control. By differentiated displaying of the emoticon area and the message processing area, it can not only clearly display various emoticons and controls related to message processing to users, but also reduce the problem of stacking or concentrating multiple emoticons or controls in one control or small area, thereby simplifying the operation logic in the user's message processing process, which is conducive to quick feedback or processing of messages, and improving the user experience.

FIG. 11 is a schematic structural diagram of a message processing device provided by an embodiment of the present disclosure. As shown in FIG. 11, the message processing device comprises: a trigger operation detection module 210 and a display module 220.

The trigger operation detection module 210 is configured to display a conversation message in a conversation interface, and detect a trigger operation on the conversation message. The display module 220 is configured to display an emoticon area and a message processing area corresponding to the conversation message in response to the trigger operation satisfying a preset condition; wherein the emoticon area and the message processing area are independent of each other and have different display positions in the conversation interface, the emoticon area comprises at least one selectable emoticon, and the message processing area comprises at least one function control.

In some embodiments, the trigger operation detection module 210 is further configured to display trigger prompt information at a position associated with the conversation message to prompt the trigger operation and/or the preset condition of the conversation message; wherein the position comprises an end position of a display frame to which the conversation message belongs, a position at a bottom of the display frame, or a position below the display frame.

In some embodiments, the trigger prompt information and the corresponding conversation message are displayed in a differentiated manner; the differentiated displaying comprises: displaying the conversation message and the trigger prompt information in different fonts, colors and/or font sizes, or displaying a sub-display frame to which the trigger prompt information belongs and the display frame with different fill colors.

In some embodiments, the trigger operation comprises: a long-press operation on the conversation message; and the preset condition comprises: a duration of the long-press operation on the conversation message reaching a preset duration threshold.

In some embodiments, the display module 220 is further configured to display the emoticon area at an edge of a display frame to which the conversation message belongs, and display the message processing area at a bottom of the conversation interface.

In some embodiments, the message processing apparatus further comprises a masking display module.

The masking display module is used configured to mask display of another conversation message in the conversation interface to which the conversation message belongs.

In some embodiments, the masking display comprises: drawing a mask layer corresponding to the other conversation message to mask display of the other conversation message based on the mask layer; wherein a transparency of the mask layer is within a preset transparency range.

In some embodiments, the display module 220 comprises a conversation message display unit and an area display unit.

The conversation message display unit is configured to display the conversation message on a pop-up page.

The area display unit is configured to display the emoticon area at an edge of a display frame to which the conversation message belongs, and display the message processing area at a bottom of the pop-up page.

In some embodiments, at least one function control in the message processing area is displayed laterally, and the message processing area is configured to be slid laterally to display more function controls.

In some embodiments, the display module 220 is further configured to determine an object type of an object to which the conversation message belongs, and determine the at least one function control in the message processing area according to the object type.

In some embodiments, the display module 220 is further configured to determine that the at least one function control does not comprise a report control in response to the object type being a first object type; and determine that the at least one function control does not comprise a recall control in response to the object type being a second object type.

According to the invention, the display module is further configured to display the at least one selectable emoticon in the emoticon area. The displaying of the at least one selectable emoticon in the emoticon area comprises: determining a user identification of a user who performs the trigger operation on the conversation message; and determining at least one selectable emoticon displayed in the emoticon area and a display order of the at least one selectable emoticon according to a language type and/or region type, and optionally use frequencies of various emoticons, corresponding to the user identification.

In some embodiments, the message processing device further comprises an emoticon feedback area creation module.

The emoticon feedback area creation module is configured to, in response to a trigger operation on a selectable emoticon in the emoticon area being detected, create an emoticon feedback area at a bottom of the conversation message or at a bottom of a display frame to which the conversation message belongs and display a triggered target emoticon in the emoticon feedback area.

In some embodiments, the message processing device further comprises an emoticon display module.

The emoticon display module is configured to display a plurality of target emoticons corresponding to the conversation message in a tiled manner in an emoticon feedback area in response to the plurality of target emoticons being received and the plurality of target emoticons being different.

In some embodiments, the emoticon display module is further configured to, in response to a plurality of target emoticons corresponding to the conversation message being received, and the plurality of target emoticons comprising same target emoticons, treat the same target emoticons as a single target emoticon and display the single target emoticon and other different target emoticons in a tiled manner in an emoticon feedback area.

In some embodiments, the message processing device further comprises an emoticon display order determination module.

The emoticon display order determination module is configured to display various target emoticons in order in the emoticon feedback area according to receiving time of the various target emoticons.

In some embodiments, the message processing device further comprises a presentation number determination module configured to display a total number of all target emoticons presented in the conversation message at an end of a last target emoticon in the emoticon feedback area.

In some embodiments, the message processing apparatus further comprises a list page display module.

The list page display module is configured to pop up a list page comprising a plurality of pieces of display data in response to it being detected that the emoticon feedback area is triggered; wherein the display data comprises a target emoticon and an user identification corresponding to the target emoticon.

In some embodiments, a display size of the list page is smaller than a display size of the conversation interface, and a bottom of the list page horizontally corresponds to a bottom of the conversation interface.

In some embodiments, the message processing device further comprises an emoticon feedback area updating module.

The emoticon feedback area updating module is configured to, in response to a trigger operation on the selectable emoticon in the emoticon area being detected again, update a triggered target emoticon to the emoticon feedback area, and remove a target emoticon corresponding to a previous trigger operation from the emoticon feedback area.

In some embodiments, the message processing apparatus further comprises a default emoticon adding module.

The default emoticon adding module is configured to, in response to it being detected that the conversation message is double-clicked, create an emoticon feedback area at a bottom of the conversation message, and add a default emoticon to the emoticon feedback area.

In the technical solutions provided in the embodiments of the present disclosure, a conversation message is displayed in a conversation interface, and a trigger operation on the conversation message is detected; and an emoticon area and a message processing area corresponding to the conversation message is displayed in response to the trigger operation satisfying a preset condition; wherein the emoticon area and the message processing area are independent of each other and have different display positions in the conversation interface, the emoticon area comprises at least one selectable emoticon, and the message processing area comprises at least one function control. By differentiated displaying of the emoticon area and the message processing area, it can not only clearly display various emoticons and controls related to message processing to users, but also reduce the problem of stacking or concentrating multiple emoticons or controls in one control or small area, thereby simplifying the operation logic in the user's message processing process, which is conducive to quick feedback or processing of messages, and improving the user experience.

The message processing device provided in the embodiment of the present disclosure can execute the message processing method provided in any embodiment of the present disclosure, and has corresponding functional modules to implement the method and achieve the beneficial effect of the present disclosure.

It should be noted that the units and modules comprised in the above device are only divided according to the functional logic, but are not limited to the above division, as long as the corresponding functions can be realized. In addition, the specific names of the functional units are only for the convenience of distinguishing from each other, and are not used to limit the protection scope of the embodiments of the present disclosure.

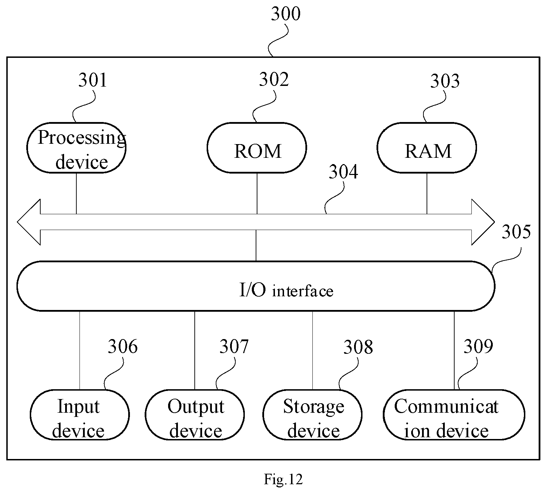

FIG. 12 is a schematic structural diagram of an electronic device provided by an embodiment of the present disclosure. Referring to FIG. 12, a structural diagram of an electronic device (e.g., a terminal device or server shown in FIG. 12) 300 suitable for implementing an embodiment of the present disclosure is shown. The terminal device of the embodiment of the present disclosure may comprise, but not limited to, a mobile terminal such as a mobile phone, a notebook computer, a digital broadcast receiver, a PDA (Personal Digital Assistant), a PAD (tablet computer), a PMP (Portable Multimedia Player), an on-board terminal (such as an on-board navigation terminal), and a fixed terminal such as a digital TV, a desktop computer, and the like. The electronic device shown in FIG. 12 is merely an example and should not impose any limitation on the function and scope of the embodiment of the present disclosure.

As shown in FIG. 12, the electronic device 300 may comprise a processing device (e.g., a central processing unit, a graphics processor) 301, which may perform various appropriate actions and processes according to a program stored in Read Only Memory (ROM) 302 or a program loaded from storage device 308 into Random Access Memory (RAM) 303. In RAM 303, various programs and data required for the operation of the electronic device 300 are also stored. Processing device 301, ROM 302 and RAM 303 are connected to each other through bus 304. Input/Output (I/O) interface 305 is also connected to bus 304.

Generally, the following devices can be connected to I/O interface 305: an input device 306 comprising, for example, a touch screen, a touch pad, a keyboard, a mouse, a camera, a microphone, an accelerometer, a gyroscope, etc.; an output device 307 comprising, for example, a liquid crystal display (LCD), a speaker, a vibrator, etc.; a storage device 308 such as a magnetic tape, a hard disk, etc.; and a communication device 309. The communication device 309 enables the electronic device 300 to communicate wirelessly or by wire with other devices to exchange data. Although FIG. 12 shows an electronic device 300 having various components, it should be understood that it is not required to implement or provide all the illustrated components. Alternatively, more or fewer components can be implemented or provided.

In particular, according to an embodiment of the present disclosure, the processes described above with reference to the flowchart can be implemented as a computer software program. For example, an embodiment of the present disclosure comprises a computer program product, which comprises a computer program carried on a non-transitory computer readable medium, and containing program code for executing the method shown in the flowchart. In such an embodiment, the computer program may be downloaded and installed from the network through the communication device 309, or installed from the storage device 306, or from the ROM 302. When the computer program is executed by the processing device 301, the above functions defined in the method of the embodiment of the present disclosure are performed.

The names of messages or information exchanged between multiple devices in the embodiments of the present disclosure are only used for illustrative purposes, and are not used to limit the scope of these messages or information.

The electronic device provided by the embodiment of the present disclosure and the message processing method provided by the above embodiment belong to the same inventive concept. For the technical details not described in detail in the embodiment, reference can be made to the above embodiment, and the embodiment can achieve the same beneficial effect as the above embodiment.

An embodiment of the present application further provides a computer storage medium on which a computer program is stored, which when executed by a processor implement the message processing method provided in the above embodiment.

It should be noted that the computer-readable medium in the present disclosure may be a computer-readable signal medium or a computer-readable storage medium, or any combination of thereof. The computer readable storage medium can be, for example, but not limited to, an electronic, magnetic, optical, electromagnetic, infrared, or semiconductor system, apparatus, or device, or any combination of the above. More specific examples of the computer readable storage medium may comprise, but are not limited to: electrical connection with one or more wires, portable computer disk, hard disk, random access memory (RAM), read only memory (ROM), erasable programmable read only memory (EPROM or flash), fiber optics, portable compact disk Read only memory (CD-ROM), optical storage device, magnetic storage device, or any suitable combination of the foregoing. In the present disclosure, a computer readable storage medium can be any tangible medium that can contain or store a program, which can be used by or in connection with an instruction execution system, apparatus or device. In the present disclosure, a computer readable signal medium may comprise a data signal that is propagated in the baseband or as part of a carrier, carrying computer readable program code. Such propagated data signals can take a variety of forms comprising, but not limited to, electromagnetic signals, optical signals, or any suitable combination of the foregoing. The computer readable signal medium can also be any computer readable medium other than a computer readable storage medium, which can transmit, propagate, or transport a program for use by or in connection with the instruction execution system, apparatus, or device. Program code embodied on a computer readable medium can be transmitted by any suitable medium, comprising but not limited to wire, fiber optic cable, RF (radio frequency), etc., or any suitable combination of the foregoing.

In some embodiments, a client and a server can communicate using any currently known or future developed network protocol such as HTTP (HyperText Transfer Protocol), and can be interconnected by any form or medium of digital data communication, e.g., a communication network. Examples of communication networks comprise a local area network ("LAN") and a wide area network ("WAN"), the Internet, and end-to-end networks (for example, ad hoc end-to-end networks), as well as any currently known or future developed networks.

The above computer-readable medium may be comprised in the electronic device described above; or it may exist alone without being assembled into the electronic device.

The computer-readable medium carries one or more programs that cause, when executed by the electronic device, the electronic device to perform the following steps: displaying a conversation message in a conversation interface, and detecting a trigger operation on the conversation message; and displaying an emoticon area and a message processing area corresponding to the conversation message in response to the trigger operation satisfying a preset condition; wherein the emoticon area and the message processing area are independent of each other and have different display positions in the conversation interface, the emoticon area comprises at least one selectable emoticon, and the message processing area comprises at least one function control.

The computer program code for executing operations of the present disclosure may be complied by one or more program design languages or any combination thereof, the program design languages comprising but not limited to object-oriented program design languages, such as Java, Smalltalk, C++, etc., as well as conventional procedural program design languages, such as "C" program design language or similar program design language. A program code may be completely or partly executed on a user computer, or executed as an independent software package, partly executed on the user computer and partly executed on a remote computer, or completely executed on a remote computer or server. In the latter circumstance, the remote computer may be connected to the user computer through various kinds of networks, comprising local area network (LAN) or wide area network (WAN), or connected to external computer (for example using an internet service provider via Internet).

The flowcharts and block diagrams in the different depicted embodiments illustrate the architecture, functionality, and operation of some possible implementations of apparatus, methods and computer program products. In this regard, each block in the flowchart or block diagrams may represent a module, segment, or portion of code, which comprises one or more executable instructions for implementing the specified function or functions. It should also be noted that, in some alternative implementations, the functions noted in the block may occur out of the order noted in the figures. For example, two blocks shown in succession may be executed substantially in parallel, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The units involved in the embodiments described in the present disclosure can be implemented in software or hardware. The name of a unit does not constitute a limitation of the unit itself under certain circumstances, for example, a first acquisition unit may also be described as "a unit that obtains at least two Internet Protocol addresses".

The functions described above may be performed at least in part by one or more hardware logic components. For example, without limitation, exemplary types of hardware logic components that can be used comprise: Field Programmable Gate Array (FPGA), Application Specific Integrated Circuit (ASIC), Application Specific Standard Product (ASSP), System on Chip (SOC), Complex Programmable Logic Device (CPLD), etc.

In the context of the present disclosure, a machine-readable medium may be a tangible medium, which may contain or store a program for use by or in connection with an instruction execution system, apparatus, or device. The machine-readable medium may be a machine-readable signal medium or a machine-readable storage medium. The machine-readable medium may comprise, but is not limited to, an electronic, magnetic, optical, electromagnetic, infrared, or semiconductor system, apparatus, or device, or any suitable combination of thereof. More specific examples of the machine-readable storage medium may comprise electrical connection with one or more wires, portable computer disk, hard disk, random access memory (RAM), read only memory (ROM), erasable programmable read only memory (EPROM or flash), fiber optics, portable compact disk Read only memory (CD-ROM), optical storage device, magnetic storage device, or any suitable combination of the foregoing.

The above description is only preferred embodiments of the present disclosure and an explanation of the applied technical principles. Those skilled in the art should understand that the scope of disclosure involved in this disclosure is not limited to the technical solutions formed by the specific combination of the above technical features, and should also cover other technical solutions formed by any combination of the above technical features or their equivalent features without departing from the disclosed concept. For example, technical solutions formed by replacing the above features with technical features having similar functions to those disclosed in the present disclosure (but not limited to).

In addition, although the operations are depicted in a specific order, this should not be understood as requiring these operations to be performed in the specific order shown or performed in a sequential order. Under certain circumstances, multitasking and parallel processing may be advantageous. Likewise, although several specific implementation details are comprised in the above discussion, these should not be construed as limiting the scope of the present disclosure. Certain features that are described in the context of separate embodiments can also be implemented in combination in a single embodiment. Conversely, various features described in the context of a single embodiment can also be implemented in multiple embodiments individually or in any suitable subcombination.

Although the subject matter has been described in language specific to structural features and/or logical actions of the method, it should be understood that the subject matter defined in the appended claims is not necessarily limited to the specific features or actions described above. On the contrary, the specific features and actions described above are merely exemplary forms of implementing the claims.

## Claims

1. A message processing method, comprising:
displaying a conversation message in a conversation interface, and detecting a trigger operation on the conversation message (S110);
displaying an emoticon area and a message processing area corresponding to the conversation message in response to the trigger operation satisfying a preset condition (S120); wherein the emoticon area and the message processing area are independent of each other and have different display positions in the conversation interface, the emoticon area comprises at least one selectable emoticon, and the message processing area comprises at least one function control; and
displaying the at least one selectable emoticon in the emoticon area;
**characterised in that**
the displaying of the at least one selectable emoticon in the emoticon area comprises:
determining a user identification of a user who performs the trigger operation on the conversation message; and
determining at least one selectable emoticon displayed in the emoticon area and a display order of the determined at least one selectable emoticon according to a language type and/or a region type corresponding to the user identification.

2. The message processing method according to claim 1, wherein the displaying of the conversation message in the conversation interface comprises:
displaying trigger prompt information at a position associated with the conversation message to prompt the trigger operation and/or the preset condition of the conversation message;
wherein the position comprises an end position of a display frame to which the conversation message belongs, a position at a bottom of the display frame, or a position below the display frame.

3. The message processing method according to claim 2, wherein differentiated displaying of the trigger prompt information and the conversation message corresponding to the trigger prompt information is made;
wherein the differentiated displaying comprises: displaying the conversation message and the trigger prompt information in different fonts, colors and/or font sizes, or displaying a sub-display frame to which the trigger prompt information belongs and the display frame with different fill colors.

4. The message processing method according to any of claims 1 to 3, wherein:
the trigger operation comprises: a long-press operation on the conversation message; and the preset condition comprises: a duration of the long-press operation on the conversation message reaching a preset duration threshold; and/or
the message processing method further comprises: in response to it being detected that the conversation message is double-clicked, creating an emoticon feedback area at a bottom of the conversation message, and adding a default emoticon to the emoticon feedback area.

5. The message processing method according to any of claims 1 to 4, wherein the displaying of the emoticon area and the message processing area corresponding to the conversation message comprises:
displaying the emoticon area at an edge of a display frame to which the conversation message belongs, and displaying the message processing area at a bottom of the conversation interface.

6. The message processing method according to claim 5, further comprising:
masking display of another conversation message in the conversation interface to which the conversation message belongs;
wherein the masking display comprises: drawing a mask layer corresponding to the other conversation message to mask display of the other conversation message based on the mask layer; wherein a transparency of the mask layer is within a preset transparency range.

7. The message processing method according to any of claims 1 to 4, wherein the displaying of the emoticon area and the message processing area corresponding to the conversation message comprises:
displaying the conversation message on a pop-up page; and
displaying the emoticon area at an edge of a display frame to which the conversation message belongs, and displaying the message processing area at a bottom of the pop-up page.

8. The message processing method according to claim 5 or 6, wherein:
the at least one function control in the message processing area is displayed laterally, and the message processing area is configured to be slid laterally to display more function controls; and/or
the displaying of the message processing area at the bottom of the conversation interface comprises: determining an object type of an object to which the conversation message belongs, and determining the at least one function control in the message processing area according to the object type; wherein the determining of the at least one function control in the message processing area according to the object type comprises: determining that the at least one function control does not comprise a report control in response to the object type being a first object type; and determining that the at least one function control does not comprise a recall control in response to the object type being a second object type.

9. The message processing method according to any of claims 1 to 8, further comprising:
in response to a trigger operation on a selectable emoticon in the emoticon area being detected, creating an emoticon feedback area at a bottom of the conversation message or at a bottom of a display frame to which the conversation message belongs and displaying a triggered target emoticon in the emoticon feedback area.

10. The message processing method according to any of claims 1 to 9, further comprising:
displaying a plurality of target emoticons corresponding to the conversation message in a tiled manner in an emoticon feedback area in response to the plurality of target emoticons being received and the plurality of target emoticons being different; or
in response to a plurality of target emoticons corresponding to the conversation message being received, and the plurality of target emoticons comprising same target emoticons, treating the same target emoticons as a single target emoticon and displaying the single target emoticon and other different target emoticons in a tiled manner in an emoticon feedback area.

11. The message processing method according to claim 10, further comprising:
displaying various target emoticons in order in the emoticon feedback area according to receiving time of the various target emoticons; and/or
displaying a total number of all target emoticons presented in the conversation message at an end of a last target emoticon in the emoticon feedback area.

12. The message processing method according to claim 9, further comprising:
popping up a list page comprising a plurality of pieces of display data in response to it being detected that the emoticon feedback area is triggered, wherein the display data comprises a target emoticon and an user identification corresponding to the target emoticon, a display size of the list page is smaller than a display size of the conversation interface, and a bottom of the list page horizontally corresponds to a bottom of the conversation interface; or
in response to a trigger operation on the selectable emoticon in the emoticon area being detected again, updating a triggered target emoticon to the emoticon feedback area, and removing a target emoticon corresponding to a previous trigger operation from the emoticon feedback area.

13. An electronic device, comprising:
one or more processors (301); and
a storage device (302, 303 and 308) configured to store one or more programs, which when executed by the one or more processors cause the one or more processors to implement the message processing method according to any of claims 1 to 12.

14. A storage medium containing computer executable instructions, which when executed by a computer processor carry out the message processing method according to any of claims 1 to 12.

## Patentansprüche

1. Nachrichtenverarbeitungsverfahren, das Folgendes umfasst:
Anzeigen einer Konversationsnachricht in einer Konversationsoberfläche und Erfassen einer Auslöseoperation an der Konversationsnachricht (S110);
Anzeigen eines Emoticon-Bereichs und eines Nachrichtenverarbeitungsbereichs, die der Konversationsnachricht entsprechen, infolgedessen, dass die Auslöseoperation eine voreingestellte Bedingung erfüllt (S120); wobei der Emoticon-Bereich und der Nachrichtenverarbeitungsbereich voneinander unabhängig sind und unterschiedliche Anzeigepositionen in der Konversationsoberfläche aufweisen, der Emoticon-Bereich mindestens ein auswählbares Emoticon umfasst und der Nachrichtenverarbeitungsbereich mindestens ein Funktionssteuerelement umfasst; und
Anzeigen des mindestens einen auswählbaren Emoticons im Emoticon-Bereich;
**dadurch gekennzeichnet, dass**
das Anzeigen des mindestens einen auswählbaren Emoticons im Emoticon-Bereich Folgendes umfasst:
Ermitteln einer Benutzerkennung eines Benutzers, der die Auslöseoperation an der Konversationsnachricht durchführt; und
Ermitteln mindestens eines auswählbaren Emoticons, das im Emoticon-Bereich angezeigt wird, und einer Anzeigereihenfolge des ermittelten mindestens einen auswählbaren Emoticons gemäß einem Sprachtyp und/oder einem Regionstyp, der der Benutzerkennung entspricht.

2. Nachrichtenverarbeitungsverfahren nach Anspruch 1, wobei das Anzeigen der Konversationsnachricht in der Konversationsoberfläche Folgendes umfasst:
Anzeigen von Auslöseabfrageinformationen an einer Position, die mit der Konversationsnachricht verknüpft ist, um die Auslöseoperation und/oder die voreingestellte Bedingung der Konversationsnachricht abzufragen;
wobei die Position eine Endposition eines Anzeigerahmens, zu dem die Konversationsnachricht gehört, eine Position an einem unteren Rand des Anzeigerahmens oder eine Position unterhalb des Anzeigerahmens umfasst.

3. Nachrichtenverarbeitungsverfahren nach Anspruch 2, wobei differenziertes Anzeigen der Auslöseabfrageinformationen und der Konversationsnachricht, die den Auslöseabfrageinformationen entspricht, erfolgt;
wobei das differenzierte Anzeigen Folgendes umfasst: Anzeigen der Konversationsnachricht und der Auslöseabfrageinformationen in unterschiedlichen Schriftarten, Farben und/oder Schriftgrößen, oder Anzeigen eines Unteranzeigerahmens, zu dem die Auslöseabfrageinformationen gehören, und des Anzeigerahmens mit unterschiedlichen Füllfarben.

4. Nachrichtenverarbeitungsverfahren nach einem der Ansprüche 1 bis 3, wobei:
die Auslöseoperation Folgendes umfasst: eine lange Druckoperation auf der Konversationsnachricht; und die voreingestellte Bedingung Folgendes umfasst: eine Dauer der langen Druckoperation auf der Konversationsnachricht, die einen vorgegebenen Dauerschwellenwert erreicht; und/oder
das Nachrichtenverarbeitungsverfahren ferner Folgendes umfasst: infolgedessen, dass es erfasst wird, dass die Konversationsnachricht doppelt geklickt wird, Erstellen eines Emoticon-Rückmeldungsbereichs an einem unteren Rand der Konversationsnachricht und Hinzufügen eines Standard-Emoticons zu dem Emoticon-Rückmeldungsbereich.

5. Nachrichtenverarbeitungsverfahren nach einem der Ansprüche 1 bis 4, wobei das Anzeigen des Emoticon-Bereichs und des Nachrichtenverarbeitungsbereichs, der der Konversationsnachricht entspricht, Folgendes umfasst:
Anzeigen des Emoticon-Bereichs an einem Rand eines Anzeigerahmens, zu dem die Konversationsnachricht gehört, und Anzeigen des Nachrichtenverarbeitungsbereichs an einem unteren Rand der Konversationsoberfläche.

6. Nachrichtenverarbeitungsverfahren nach Anspruch 5, das ferner Folgendes umfasst:
Maskieren einer Anzeige einer anderen Konversationsnachricht in der Konversationsoberfläche, zu der die Konversationsnachricht gehört;
wobei die Maskierungsanzeige Folgendes umfasst: Zeichnen einer Maskenschicht, die der anderen Konversationsnachricht entspricht, um eine Anzeige der anderen Konversationsnachricht basierend auf der Maskenschicht zu maskieren; wobei eine Transparenz der Maskenschicht innerhalb eines voreingestellten Transparenzbereichs liegt.

7. Nachrichtenverarbeitungsverfahren nach einem der Ansprüche 1 bis 4, wobei das Anzeigen des Emoticon-Bereichs und des Nachrichtenverarbeitungsbereichs, der der Konversationsnachricht entspricht, Folgendes umfasst:
Anzeigen der Konversationsnachricht auf einer Einblendungsseite; und
Anzeigen des Emoticon-Bereichs an einem Rand eines Anzeigerahmens, zu dem die Konversationsnachricht gehört, und Anzeigen des Nachrichtenverarbeitungsbereichs an einem unteren Rand der Einblendungsseite.

8. Nachrichtenverarbeitungsverfahren nach Anspruch 5 oder 6, wobei:
das mindestens eine Funktionssteuerelement in dem Nachrichtenverarbeitungsbereich seitlich angezeigt wird und der Nachrichtenverarbeitungsbereich dazu konfiguriert ist, seitlich verschoben zu werden, um mehr Funktionssteuerelemente anzuzeigen; und/oder
das Anzeigen des Nachrichtenverarbeitungsbereichs am unteren Rand der Konversationsoberfläche Folgendes umfasst: Ermitteln eines Objekttyps eines Objekts, zu dem die Konversationsnachricht gehört, und Ermitteln des mindestens einen Funktionssteuerelements im Nachrichtenverarbeitungsbereich gemäß dem Objekttyp; wobei das Ermitteln des mindestens einen Funktionssteuerelements im Nachrichtenverarbeitungsbereich gemäß dem Objekttyp Folgendes umfasst: Ermitteln, dass das mindestens eine Funktionssteuerelement kein Berichtssteuerelement umfasst, infolgedessen, dass der Objekttyp ein erster Objekttyp ist; und Ermitteln, dass das mindestens eine Funktionssteuerelement kein Rückrufsteuerelement umfasst, infolgedessen, dass der Objekttyp ein zweiter Objekttyp ist.

9. Nachrichtenverarbeitungsverfahren nach einem der Ansprüche 1 bis 8, das ferner Folgendes umfasst:
infolgedessen, dass eine Auslöseoperation auf einem auswählbaren Emoticon im Emoticon-Bereich erfasst wird, Erstellen eines Emoticon-Rückmeldungsbereichs an einem unteren Rand der Konversationsnachricht oder an einem unteren Rand eines Anzeigerahmens, zu dem die Konversationsnachricht gehört, und Anzeigen eines ausgelösten Ziel-Emoticons im Emoticon-Rückmeldungsbereich.

10. Datenverarbeitungsverfahren nach einem der Ansprüche 1 bis 9, das ferner Folgendes umfasst:
Anzeigen mehrerer Ziel-Emoticons, die der Konversationsnachricht entsprechen, in einer gekachelten Weise in einem Emoticon-Rückmeldungsbereich, infolgedessen dass die mehreren empfangenen Ziel-Emoticons und die mehreren Ziel-Emoticons unterschiedlich sind; oder
infolgedessen, dass mehrere Ziel-Emoticons, die der empfangenen Konversationsnachricht entsprechen, und die mehreren Ziel-Emoticons gleiche Ziel-Emoticons umfassen, Behandeln der gleichen Ziel-Emoticons als ein einzelnes Ziel-Emoticon und Anzeigen des einzelnen Ziel-Emoticons und anderer unterschiedlicher Ziel-Emoticons auf eine gekachelte Weise in einem Emoticon-Rückmeldungsbereich

11. Nachrichtenverarbeitungsverfahren nach Anspruch 10, das ferner Folgendes umfasst:
Anzeigen der verschiedenen Ziel-Emoticons in der Reihenfolge eines Empfangszeitpunkts der verschiedenen Ziel-Emoticons im Emoticon-Rückmeldungsbereich; und/oder
Anzeigen einer Gesamtzahl aller in der Konversationsnachricht dargestellten Ziel-Emoticons an einem Ende eines letzten Ziel-Emoticons im Emoticon-Rückmeldungsbereich.

12. Datenverarbeitungsverfahren nach Anspruch 9, das ferner Folgendes umfasst:
Einblenden einer Listenseite, die mehrere Anzeigedatenelemente umfasst, infolge darauf, dass es erfasst wird, dass der Emoticon-Rückmeldungsbereich ausgelöst wurde, wobei die Anzeigedaten ein Ziel-Emoticon und eine Benutzerkennung, die dem Ziel-Emoticon entspricht, umfassen, eine Anzeigegröße der Listenseite kleiner als eine Anzeigegröße der Konversationsoberfläche ist und ein unterer Rand der Listenseite horizontal einem unteren Rand der Konversationsoberfläche entspricht; oder
infolgedessen, dass eine Auslöseoperation auf dem auswählbaren Emoticon, Emoticon-Bereich wieder erfasst wird, Aktualisieren eines ausgelösten Ziel-Emoticons zu dem Emoticon-Rückmeldungsbereich, und Entfernen eines Ziel-Emoticons, der einer vorherigen Auslöseoperation entspricht, aus dem Emoticon-Rückmeldungsbereich.

13. Elektronische Vorrichtung, die Folgendes umfasst:
einen oder mehrere Prozessoren (301); und
eine Datenspeichervorrichtung (302, 303 und 308), die dazu konfiguriert ist, ein oder mehrere Programme zu speichern, die, wenn sie von dem einen oder den mehreren Prozessoren ausgeführt werden, den einen oder die mehreren Prozessoren veranlassen, das Nachrichtenverarbeitungsverfahren nach einem der Ansprüche 1 bis 12 zu implementieren.

14. Datenspeichermedium, das computerausführbare Anweisungen enthält, die, wenn sie von einem Computerprozessor ausgeführt werden, das Nachrichtenverarbeitungsverfahren nach einem der Ansprüche 1 bis 12 durchführen.

## Revendications

1. Procédé de traitement de message, comprenant :
l'affichage d'un message de conversation dans une interface de conversation, et la détection d'une opération de déclenchement sur le message de conversation (S110) ;
l'affichage d'une zone d'émoticônes et d'une zone de traitement de message correspondant au message de conversation en réponse à l'opération de déclenchement satisfaisant à une condition prédéfinie (S120) ; dans lequel la zone d'émoticônes et la zone de traitement de message sont indépendantes l'une de l'autre et présentent des positions d'affichage différentes dans l'interface de conversation, la zone d'émoticônes comprend au moins une émoticône sélectionnable, et la zone de traitement de message comprend au moins une commande de fonction ; et
l'affichage de la au moins une émoticône sélectionnable dans la zone d'émoticônes ;
**caractérisé en ce que**
l'affichage de la au moins une émoticône sélectionnable dans la zone d'émoticônes comprend :
la détermination d'une identification d'utilisateur d'un utilisateur qui effectue l'opération de déclenchement sur le message de conversation ; et
la détermination d'au moins une émoticône sélectionnable affichée dans la zone d'émoticônes et de l'ordre d'affichage de la au moins une émoticône sélectionnable déterminée en fonction d'un type de langue et/ou d'un type de région correspondant à l'identification d'utilisateur.

2. Procédé de traitement de message selon la revendication 1, dans lequel l'affichage du message de conversation dans l'interface de conversation comprend :
l'affichage d'informations d'invite de déclenchement à une position associée au message de conversation pour solliciter l'opération de déclenchement et/ou la condition prédéfinie du message de conversation ;
dans lequel la position comprend une position d'extrémité d'un cadre d'affichage auquel appartient le message de conversation, une position au bas du cadre d'affichage, ou une position en dessous du cadre d'affichage.

3. Procédé de traitement de message selon la revendication 2, dans lequel il est procédé à un affichage différencié des informations d'invite de déclenchement et du message de conversation correspondant aux informations d'invite de déclenchement ;
dans lequel l'affichage différencié comprend : l'affichage du message de conversation et des informations d'invite de déclenchement dans des polices, des couleurs et/ou des tailles de police différentes, ou l'affichage d'un sous-cadre d'affichage auquel appartiennent les informations d'invite de déclenchement et du cadre d'affichage avec des couleurs de remplissage différentes.

4. Procédé de traitement de message selon l'une quelconque des revendications 1 à 3, dans lequel :
l'opération de déclenchement comprend : une opération d'appui long sur le message de conversation ; et la condition prédéfinie comprend : une durée de l'opération d'appui long sur le message de conversation atteignant un seuil de durée prédéfini ; et/ou
le procédé de traitement de message comprend en outre : en réponse à la détection d'un double-clic sur le message de conversation, la création d'une zone de rétroaction d'émoticône au bas du message de conversation, et l'ajout d'une émoticône par défaut à la zone de rétroaction d'émoticône.

5. Procédé de traitement de message selon l'une quelconque des revendications 1 à 4, dans lequel l'affichage de la zone d'émoticônes et de la zone de traitement de message correspondant au message de conversation comprend :
l'affichage de la zone d'émoticônes à un bord d'un cadre d'affichage auquel appartient le message de conversation, et l'affichage de la zone de traitement de message au bas de l'interface de conversation.

6. Procédé de traitement de message selon la revendication 5, comprenant en outre :
le masquage de l'affichage d'un autre message de conversation dans l'interface de conversation à laquelle appartient le message de conversation ;
dans lequel le masquage de l'affichage comprend : le tracé d'une couche de masque correspondant à l'autre message de conversation pour masquer l'affichage de l'autre message de conversation sur la base de la couche de masque ; dans lequel une transparence de la couche de masque se situe dans une plage de transparence prédéfinie.

7. Procédé de traitement de message selon l'une quelconque des revendications 1 à 4, dans lequel l'affichage de la zone d'émoticônes et de la zone de traitement de message correspondant au message de conversation comprend :
l'affichage du message de conversation sur une page contextuelle ; et
l'affichage de la zone d'émoticônes à un bord d'un cadre d'affichage auquel appartient le message de conversation, et l'affichage de la zone de traitement de message au bas de la page contextuelle.

8. Procédé de traitement de message selon la revendication 5 ou 6, dans lequel :
la au moins une commande de fonction dans la zone de traitement de message est affichée latéralement, et la zone de traitement de message est configurée pour être glissée latéralement afin d'afficher d'autres commandes de fonction ; et/ou
l'affichage de la zone de traitement de message au bas de l'interface de conversation comprend : la détermination d'un type d'objet d'un objet auquel appartient le message de conversation, et la détermination de la au moins une commande de fonction dans la zone de traitement de message en fonction du type d'objet ; dans lequel la détermination de la au moins une commande de fonction dans la zone de traitement de message en fonction du type d'objet comprend : la détermination du fait que la au moins une commande de fonction ne comprend pas de commande de signalement en réponse au fait que le type d'objet est un premier type d'objet ; et la détermination du fait que la au moins une commande de fonction ne comprend pas de commande d'annulation d'envoi en réponse au fait que le type d'objet est un second type d'objet.

9. Procédé de traitement de message selon l'une quelconque des revendications 1 à 8, comprenant en outre :
en réponse à la détection d'une opération de déclenchement sur une émoticône sélectionnable dans la zone d'émoticônes, la création d'une zone de rétroaction d'émoticône au bas du message de conversation ou au bas d'un cadre d'affichage auquel appartient le message de conversation, et l'affichage d'une émoticône cible déclenchée dans la zone de rétroaction d'émoticône.

10. Procédé de traitement de message selon l'une quelconque des revendications 1 à 9, comprenant en outre :
l'affichage d'une pluralité d'émoticônes cibles correspondant au message de conversation de manière juxtaposée dans une zone de rétroaction d'émoticône en réponse à la réception de la pluralité d'émoticônes cibles et au fait que la pluralité d'émoticônes cibles sont différentes ; ou
en réponse à la réception d'une pluralité d'émoticônes cibles correspondant au message de conversation, et au fait que la pluralité d'émoticônes cibles comprend des émoticônes cibles identiques, le traitement des émoticônes cibles identiques en tant qu'émoticône cible unique et l'affichage de l'émoticône cible unique et d'autres émoticônes cibles différentes de manière juxtaposée dans une zone de rétroaction d'émoticône.

11. Procédé de traitement de message selon la revendication 10, comprenant en outre :
l'affichage de diverses émoticônes cibles dans l'ordre dans la zone de rétroaction d'émoticône en fonction de l'heure de réception des diverses émoticônes cibles ; et/ou
l'affichage d'un nombre total de toutes les émoticônes cibles présentées dans le message de conversation à une extrémité d'une dernière émoticône cible dans la zone de rétroaction d'émoticône.

12. Procédé de traitement de message selon la revendication 9, comprenant en outre :
l'apparition d'une page de liste comprenant une pluralité d'éléments de données d'affichage en réponse à la détection du déclenchement de la zone de rétroaction d'émoticône, dans lequel les données d'affichage comprennent une émoticône cible et une identification d'utilisateur correspondant à l'émoticône cible, une taille d'affichage de la page de liste est plus petite qu'une taille d'affichage de l'interface de conversation, et un bas de la page de liste correspond horizontalement à un bas de l'interface de conversation ; ou
en réponse à la détection à nouveau d'une opération de déclenchement sur l'émoticône sélectionnable dans la zone d'émoticônes, la mise à jour d'une émoticône cible déclenchée dans la zone de rétroaction d'émoticône, et la suppression d'une émoticône cible correspondant à une opération de déclenchement précédente de la zone de rétroaction d'émoticône.

13. Dispositif électronique, comprenant :
un ou plusieurs processeurs (301) ; et
un dispositif de stockage (302, 303 et 308) configuré pour stocker un ou plusieurs programmes qui, lorsqu'ils sont exécutés par les un ou plusieurs processeurs, amènent les un ou plusieurs processeurs à mettre en œuvre le procédé de traitement de message selon l'une quelconque des revendications 1 à 12.

14. Support de stockage contenant des instructions exécutables par ordinateur qui, lorsqu'elles sont exécutées par un processeur d'ordinateur, mettent en œuvre le procédé de traitement de message selon l'une quelconque des revendications 1 à 12.
